Europäisches Patentamt

(19) European Patent Office

Office européen des brevets

(11) Numéro de publication: **0 111 038**
**A1**

(12) # DEMANDE DE BREVET EUROPEEN

(21) Numéro de dépôt: **82402200.8**

(22) Date de dépôt: **02.12.82**

(51) Int. Cl.³: **B 02 C 18/44**
**B 29 B 1/02**

(43) Date de publication de la demande:
**20.06.84** Bulletin **84/25**

(84) Etats contractants désignés:
**DE GB IT SE**

(71) Demandeur: **COMPAGNIE CLAYTON Société dite:**
**232 Chaussée Jules César**
**F-95250 Beauchamp(FR)**

(72) Inventeur: **Thieux, Jean**
**5, Allée des Hauts Dimanches**
**F-78430 Louveciennes(FR)**

(74) Mandataire: **Rodhain, Claude**
**Cabinet Claude RODHAIN 30, rue La Boétie**
**F-75008 Paris(FR)**

(54) **Granulateur d'éléments individuels de matériau, notamment de matière plastique.**

(57) Appareil granulateur comportant une table sur laquelle une bande de matière (3) est amenée par des rouleaux à un poste de découpage comprenant une lame fixe (8) placée devant une fraise rotative (10) portant des lames de coupe (11, 12), toutes les lames sont jetables et sont enserrées dans des supports de maintien (9, 26; 14, 16, 18; 21, 22) permettant un positionnement automatique desdites lames (8; 11; 12) sans aucun réglage.

L'invention est principalement utilisée pour le découpage de granulés de matière plastique.

FIG.2

EP 0 111 038 A1

Granulateur d'éléments individuels de matériau, notamment de
matière plastique.

La présente invention concerne un granulateur
du type dans lequel une bande continue, une nappe de joncs ou
une suite d'éléments individuels de matériau, notamment de matière plastique, est amenée à un poste de découpage comportant
un rotor en forme de fraise munie de lames à bord de coupe lisse
et à bord de coupe crénelé disposées de façon alternée et coupant la bande, au niveau d'une contre-lame fixe, transversalement par rapport à la direction de déplacement de la matière.

Dans ce domaine industriel de la fragmentation
d'éléments en matière plastique, tels que des bandes ou des
joncs continus, ou bien des morceaux séparés de matière plastique, on connaît diverses machines dénommées granulateurs, qui
englobent également certains broyeurs à lames ou granulateurs
de récupération. Dans les granulateurs proprement dits, on obtient des granulés de matière ayant une taille et des cotes
fixes et précises, alors que dans les broyeurs à lames constituant les granulateurs de récupération, on obtient des petits
fragments de matière de formes et de tailles différentes et
quelconques, par calibrage au travers d'une grille.

Jusqu'alors toutes ces machines à lames coupantes comportaient des lames réglables en position, par exemple au moyen d'une vis de poussée s'insérant dans une lumière
ménagée dans la lame et bloquant la lame sur le rotor de la
machine. En outre, ces lames étaient du type réaffûtable  et
cette solution entraînait des travaux importants de la part du
personnel de service, tant pour le réglage des lames, que pour
leur réaffûtage, qui en outre ne pouvait pas être effectué à
des cotes précises, ni surtout aux mêmes cotes, si bien que
ceci était la cause de l'apparition d'un balourd et d'un déséquilibre du rotor porte-lames et en définitive de vibrations
nuisibles.

Par ailleurs ces machines pouvaient également
comporter des rotors du type "fraise", qui toutefois étaient
très  coûteux  et qui, de plus, en cas d'accident, comme par
exemple lors de l'introduction d'un corps métallique, d'un clou, etc..., nécessitaient un remplacement du rotor complet, et non plus le remplacement d'une ou de plusieurs lames.

C'est pourquoi la présente invention a pour but d'éliminer les inconvénients cités précédemment et de créer un granulateur utilisant un rotor en forme de fraise dans lequel aucun réglage des lames n'est nécessaire, tout en permettant une durée d'utilisation supérieure sans aucun travail, souvent irrégulier, d'affûtage et avec une mise en place sûre, simple et précise des lames.

Ce problème est résolu conformément à l'invention dans un granulateur du type mentionné plus haut, grâce au fait que les lames mobiles et la lame fixe sont jetables et sont enserrées dans des supports de maintien permettant un positionnement automatique desdites lames, sans aucun réglage.

En outre, selon l'invention, les lames sont réversibles; par ailleurs, elles sont munies de deux bords de coupe symétriques par rapport à leur plan médian longitudinal.

Ainsi, on comprend à l'évidence que le fait d'utiliser des lames jetables réversibles à deux bords de coupe permet de supprimer tout réglage, de simplement renverser la lame lorsqu'un des deux bords de coupe est usé, ce qui accroît sa durée de vie et de l'insérer dans son support de maintien qui en assure le positionnement automatique. De plus, par suite de leur encastrement assurant une grande rigidité aux lames, il est possible de réaliser ces dernières beaucoup plus minces qu'auparavant, ce qui permet de réduire de façon importante le coût de telles lames, que l'on peut alors fabriquer en grande série.

Selon une variante de réalisation de l'invention, les supports de maintien des lames mobiles sont constitués par un système à coin et contre-coin de blocage de la lame dans des évidements dont une face intérieure est adaptée au contour de la lame et qui sont ménagés respectivement, en y étant uniformément répartis, sur le pourtour de la fraise.

En outre, chaque lame mobile comporte une rainure médiane, par exemple de forme trapézoïdale, et chaque contre-coin, monté entre la lame et le coin de blocage, est
muni, sur l'une de ses faces, d'une nervure médiane dont la
forme est complémentaire de la rainure de la lame, de sorte que
le contre-coin, bloqué lors du montage par le coin associé,
maintient la lame en position sans aucune possibilité de mouvement par rapport à la fraise.

Les avantages de ce système sont un montage
simple, efficace et sûr, avec un positionnement direct et automatique de la lame.

D'autres caractéristiques et avantages de
l'invention ressortiront de la description qui va suivre, à
titre d'exemple non limitatif et en regard des dessins annexés,
sur lesquels :

- La Fig. 1 représente une vue générale schématique en élévation latérale et en coupe de la machine conforme à l'invention.

- Les Fig. 2 et 3 montrent, en coupe et à plus
grande échelle, deux positions successives de fonctionnement de
la fraise portant des lames de coupe passant au droit de la lame
fixe de la machine.

- La Fig. 4 représente une vue en perspective
des deux types de lames mobiles et de la lame fixe, utilisées
dans la machine selon l'invention.

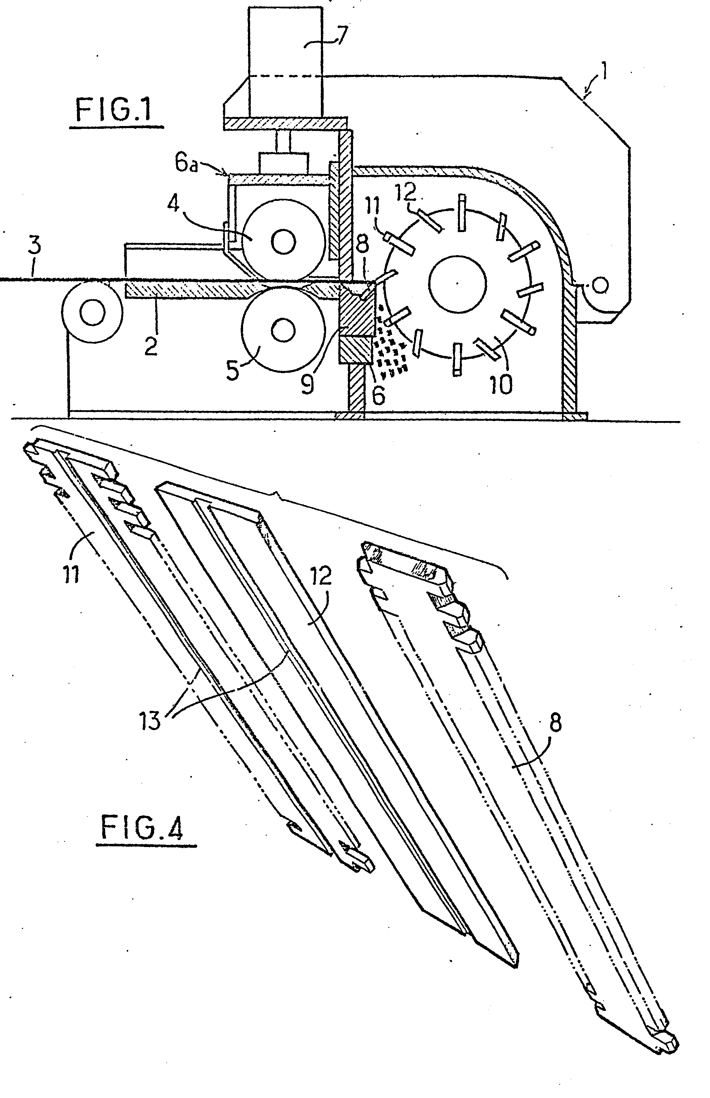

Sur la Fig. 1, où l'on a représenté une vue
générale schématique d'un granulateur conforme à l'invention,
la référence 1 désigne, dans son ensemble, la machine qui comporte essentiellement une table 2 sur laquelle circule, de la
gauche vers la droite, une bande continue (ou une nappe de joncs
ou des éléments individuels) en matière plastique 3, avancée
par des rouleaux entraîneurs 4, 5, montés dans un carter de
machine désigné globalement par la référence 6a. En outre, le
rouleau d'entraînement 4 sert de rouleau presseur et à cet effet est actionné par un vérin 7 représenté schématiquement.

La matière 3 est avancée sur le bord de droite
de la table 2, qui comporte une lame fixe crénelée 8 (voir

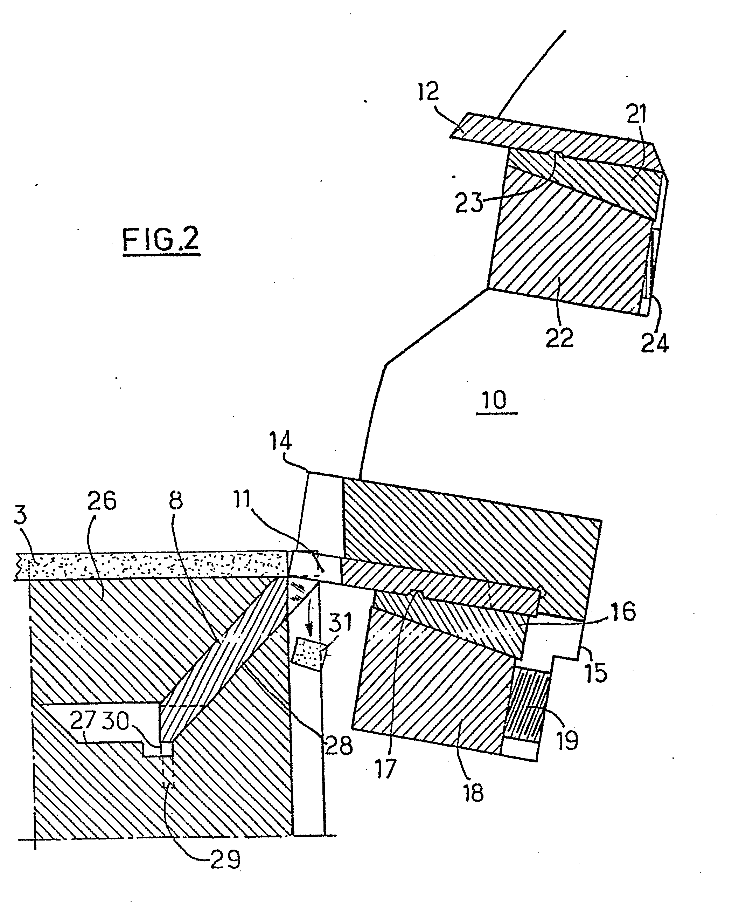

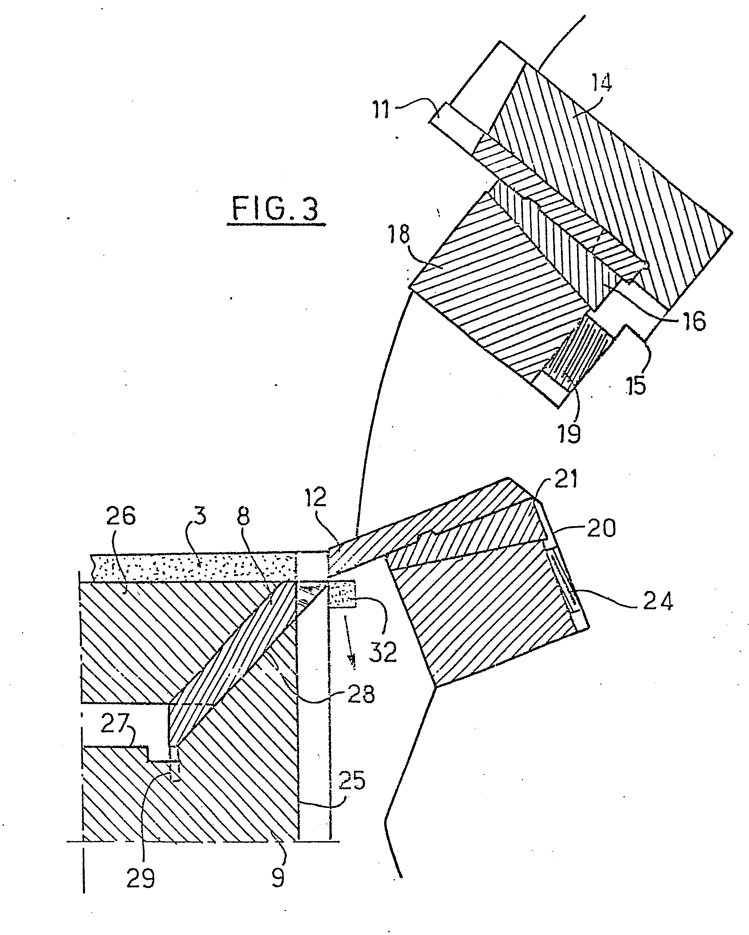

Fig. 4) montée dans un support de maintien 9 porté par le bâti de la machine 6. Devant ce bord de la table 2 et la lame 8 tourne un rotor en forme de fraise 10 muni sur son pourtour de deux séries de lames mobiles de coupe 11 et 12 disposées en alternance qui, lors de la rotation de la fraise 10 passent au droit de la lame fixe 8 pour couper la bande 3 entre elles-mêmes et la lame 8, d'une manière explicitée de façon plus détaillée en référence aux Fig. 2 et 3. Comme cela est représenté sur la Fig. 1, le carter 6 s'étend également autour de ce poste de coupe formé par la fraise 10 et le bord droit de la table 2, portant la lame fixe 8.

Comme le montrent de façon plus détaillée, les Fig. 2 et 3, les lames mobiles 11 et 12 portées par la fraise 10 sont de deux types : d'une part, des lames 11 à bord de coupe crénelé ou denté (voir également la Fig. 4), dont les dents peuvent s'engager entre les dents de la lame fixe 8, et, d'autre part, des lames 12 à bord de coupe lisse et dont l'arête de coupe vient passer tangente aux extrémités des dents de la lame crénelée fixe 8.

Les lames mobiles crénelées 11 et les lames mobiles à bord de coupe lisse 12 sont symétriques par rapport à leur plan médian et, possédant deux bords de coupe parallèles, sont réversibles et comportent respectivement une rainure médiane 13 s'étendant sur toute leur longueur. Ces lames possèdent une faible épaisseur et leur rigidité est assurée par leur encastrement dans la fraise 10, comme on va l'expliquer ci-après.

Les lames à bord crénelé 11 sont fixées dans un porte-lame 14, inséré entre la lame 11 et la face intérieure correspondante d'un évidement 15 ménagé dans la fraise 10 et qui est formé par un bloc en forme d'équerre, dont l'extrémité située du côté du bord crénelé de la lame 11 est elle-même crénelée avec une forme correspondante, le bloc porte-lame 14 étant disposé contre la lame 11 et en arrière de cette dernière suivant le sens de rotation (sens inverse des aiguilles d'une montre) de la fraise 10. Pour le maintien de l'ensemble 11-14 dans l'évidement 15, il est prévu un contre-coin 16 de forme trapézoïdale, dont la face plane tournée vers la lame 11 porte une nervure 17 dont la forme est complémentaire de celle de la rainure 13 de la lame de sorte qu'à l'état monté la lame 11 est solidaire du contre-coin 16, sans aucune possibilité de déplacement radial.

En outre, un coin 18, de forme trapézoïdale à bord incliné à l'inverse de celui du contre-coin 16 est inséré entre une paroi voisine de l'évidement 15 et le contre-coin 16 de manière à bloquer l'ensemble 16-11-14 en position dans la fraise. Ce coin de blocage est fixé de plus au corps de la fraise 10 à l'aide de moyens vissables (tels que vis, boulons, etc...) schématisés sur la figure par l'élément de tige filetée 19. Comme cela est indiqué sur le dessin, la lame 11 ne dépasse que très légèrement la limite circonférencielle du bloc 14.

Les lames à bords lisses 12 sont fixées dans un évidement 20, ménagé dans la fraise 10 et dont une surface intérieure est adaptée à celle de la lame 12, au moyen d'un contre-coin 21 et d'un coin 22 qui ont une constitution semblable à celle du coin 16 et du contre-coin 18 de blocage des lames 11. De même, le contre-coin 21 possède une nervure 23 s'engageant de façon adaptée dans la rainure 13 de la lame 12. Par ailleurs, le coin de serrage 22 comporte également des moyens vissables (boulons, vis, etc...) de fixation au corps de la fraise 10, représentés schématiquement par un élément de tige filetée 24.

Comme on le voit sur la Fig. 2, la lame 11 fait saillie sur le pourtour de la fraise 10, de manière que ses dents s'engagent entre les dents de la lame crénelée fixe 8, c'est-à-dire passent tangentiellement à la ligne verticale 25 limitant l'intérieur des entre-dents de la lame fixe 8. De même, comme le montre la Fig. 3, le bord de coupe lisse de la lame mobile 12 passe tangentiellement aux extrémités des dents de la lame crénelée fixe 8.

Les Fig. 2 et 3 montrent également le mode de fixation de la lame fixe 8, qui est montée dans le bâti 6 de la machine en y étant bloquée dans un porte-lame 9 par un coin de serrage 26 à l'aide de moyens vissables tels que boulons, vis, etc..., non représentés, le traversant et vissés dans le porte-lame 9. Ce porte-lame comporte, à sa partie supérieure, un évidement 27 de forme trapézoïdale en coupe transversale, à bords latéraux, tels que 28, inclinés par exemple à 45° et la lame est disposée obliquement contre le bord incliné de droite 28 en y étant bloquée par serrage par le coin 26, dont le profil en coupe transversale correspond à celui de l'évidement 27. En outre, dans sa partie inférieure, où le bord de la lame 8 vient s'appliquer, l'évidement 27 comporte une rainure horizontale 29 dans laquelle sont disposées, vers ses extrémités, deux butées 30 de support et de positionnement automatique de la lame fixe 8 lors de son montage. Ces butées sont de préférence des tétons verticaux de hauteur fixe supportant la lame 8 au niveau des entre-dents de son bord crénelé non en cours d'utilisation, ladite lame 8 ayant par ailleurs une forme symétrique par rapport à son plan médian (voir également la Fig. 4) et étant de ce fait réversible.

Le fonctionnement de la machine est le suivant :

On insère et on fixe les lames 11 et 12 comme indiqué, en les bloquant dans leurs évidements respectifs 15 et 20 à l'aide des contre-coins 16, 21 et des coins 18, 20 et de leurs systèmes 19, 24 de vissage dans la fraise 10. On fixe également la lame 8 en position à l'aide du coin de serrage 26 et de ses moyens de vissage dans le porte-lame 9 et on met en rotation la fraise 10.

Simultanément, la bande 3 est avancée vers la droite entre les rouleaux 4, 5 et déborde légèrement de la ligne verticale de droite 25 (Fig. 2). A ce moment, une lame crénelée 11 coince la bande entre elle et la lame crénelée fixe 8, et forme par découpage des languettes et des entailles ou encoches carrées ou rectangulaires d'une certaine longueur, en éliminant de ce fait des bouts de matière plastique 31. Puis arrive la lame 11 à bord de coupe lisse (Fig. 3) qui coupe l'ensemble de la bande 3 au niveau des languettes subsistantes en formant de ce fait des "granulés" ou petits morceaux carrés ou rectangulaires 32 de matière plastique. Ensuite, le cycle se répète selon la séquence alternée des lames mobiles 11 et 12 de la fraise 10, tournant en synchronisme avec l'avance de la bande 3.

On notera que les entre-dents des lames crénelées mobiles ont une longueur supérieure à celle des entre-dents de la lame fixe de manière qu'aucun élément ou morceau de matière plastique découpé dans la bande n'y reste rattaché et soit découpé de façon sûre et nette.

REVENDICATIONS

1°) - Granulateur du type dans lequel une bande continue (3), une nappe de joncs ou une suite d'éléments individuels de matériau, notamment de matière plastique, est amenée à un poste de découpage comportant un rotor en forme de fraise (10) munie de lames (11, 12) à bord de coupe lisse et à bord de coupe crénelé disposées de façon alternée et coupant la bande (3), au niveau d'une contre-lame fixe (8), transversalement par rapport à la direction de déplacement de la bande, caractérisé en ce que les lames mobiles (11, 12) et la lame fixe (8) sont jetables et sont enserrées dans des supports de maintien (9, 26; 14, 16, 18; 21, 22) permettant un positionnement automatique desdites lames, sans aucun réglage.

2°) - Granulateur selon la revendication 1, caractérisé en ce que les lames (8; 11; 12) sont réversibles.

3°) - Granulateur selon la revendication 2, caractérisé en ce que les lames (8; 11; 12) sont munies de deux bords de coupe symétriques par rapport à leur plan médian longitudinal.

4°) - Granulateur selon l'une quelconque des revendications 1 à 3, caractérisé en ce que les supports (14,16, 18; 21, 22) de maintien des lames mobiles (11; 12) sont constitués par un système à coin (18; 22) et contre-coin (16; 21) de blocage de la lame (11; 12) dans des évidements (15; 20), dont une face intérieure est adaptée au contour de la lame (11; 12) et qui sont ménagés respectivement, en y étant uniformément répartis, sur le pourtour de la fraise (10).

5°) - Granulateur selon la revendication 4, caractérisé en ce que chaque lame mobile (11; 12) comporte une rainure médiane (13), par exemple de forme trapézoïdale, et chaque contre-coin (16; 21), monté entre la lame (11; 12) et le coin de blocage (18; 22) est muni, sur l'une de ses faces, d'une nervure médiane (17; 23) dont la forme est complémentaire de la rainure (13) de la lame (11; 12), de sorte que le contre-coin (16; 21), bloqué lors du montage par le coin associé (18, 22) maintient la lame (11; 12) en position sans aucune possibilité de mouvement par rapport à la fraise (10).

6°) - Granulateur selon l'une quelconque des revendications 4 et 5, caractérisé en ce que le coin de blocage (18. 22) est fixé au corps de la fraise (10) à l'aide de moyens vissables (19; 24) traversant ledit coin et s'engageant dans le corps de la fraise.

7°) - Granulateur selon l'une quelconque des revendications 4 à 6, caractérisé en ce que, dans le cas des lames mobiles crénelées (11), il est prévu en outre un porte-lame (14) inséré entre la lame (11) et la face intérieure correspondante de l'évidement (15), ménagé dans la fraise (10), et qui est formé par un bloc en forme d'équerre dont l'extrémité située du côté de la partie crénelée de la lame (11) est elle-même crénelée avec une forme correspondante, le bloc porte-lame (14) étant disposé contre et en arrière de la lame (11) suivant le sens de rotation de la fraise (10).

8°) - Granulateur selon l'une quelconque des revendications 1 et 2, caractérisé en ce que la lame fixe (8) est montée dans le bâti (6) du granulateur dans un porte-lame fixe (9) en y étant bloquée par un coin de serrage (16) à l'aide de moyens vissables traversant le coin et vissés dans le porte-lame.

9°) - Granulateur selon la revendication 8, caractérisé en ce que le porte-lame (9) comporte un évidement (27) de forme trapézoïdale en coupe transversale, à bords latéraux (28) inclinés par exemple à 45° et que la lame (8) est disposée obliquement contre un bord latéral (28) incliné de l'évidement (27), en y étant bloqué par serrage par le coin de serrage (26) dont le profil en coupe transversale correspond à celui de l'évidement.

10°) - Granulateur selon la revendication 8, caractérisé en ce que, dans sa partie inférieure, où la lame (8) vient s'appliquer, l'évidement (27) est muni d'une rainure horizontale (29) dans laquelle sont disposées une ou plusieurs butées (30) de support et de positionnement automatique de la lame fixe (8) lors de son montage.

11°) - Granulateur selon la rev ndication 10, caractérisé en ce que les butées (30) sont des tétons verticaux de hauteur fixe supportant la lame fixe (8) au niveau des entre-dents de son bord crénelé non en cours d'utilisation.

12°) - Granulateur selon l'une quelconque des revendications 1 à 11, caractérisé en ce que les lames crénelées mobiles (11) possèdent des entre-dents, dont la longueur comptée parallèlement aux dents, est supérieure à la longueur correspondante des entre-dents de la lame fixe (8), les dents de chaque lame mobile crénelée (11) et les dents de la lame fixe (8) s'interpénétrant lors du sectionnement de la bande (3) coincée entre elles.

FIG.1

FIG.4

0111038

## FIG.2

## FIG.3

Office européen
des brevets

**RAPPORT DE RECHERCHE EUROPEENNE**

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl. ³) |
|---|---|---|---|
| A | US-A-4 360 168 (PETERSON) <br> * En entier * | 1,4,6 | B 02 C 18/44 <br> B 29 B 1/02 |
| A | FR-A-2 218 945 (KAMPF) <br> * En entier * | 1,4,6 | |
| A | FR-A-2 180 088 (HOLTHUIS) <br> * En entier * | 1-4 | |
| A | FR-A-2 413 129 (JANNES) <br> * Page 5, lignes 34-40; page 6, lignes 1-3 * | 1,4,6 | |
| A | EP-A-0 046 452 (BÜHLER) <br> * Pages 6-8 * | 1-4,6 | |
| A | US-A-4 350 308 (BREWER) <br> * Colonne 4, lignes 52-56 * | 1,7,8 | DOMAINES TECHNIQUES RECHERCHES (Int. Cl. ³) <br><br> B 02 C <br> B 29 B |
| A | US-A-1 750 941 (PARDEE) <br> * Page 2, lignes 21-32 * | 1,4,6 | |
| A | DE-A-2 219 784 (SCHEER) <br> * En entier * | 8-10 | |
| A | GB-A- 770 704 (BEDFORD) <br> * Page 2, lignes 7-100 * | 1,12 | |

Le présent rapport de recherche a été établi pour toutes les revendications

| Lieu de la recherche <br> LA HAYE | Date d'achevement de la recherche <br> 21-07-1983 | Examinateur <br> VERDONCK J.C.M.J. |
|---|---|---|